# EUROPEAN PATENT SPECIFICATION

(11) **EP 4 052 969 B1**
(45) Date of publication and mention of the grant of the patent: **31.12.2025**
(21) Application number: 21160906.0
(22) Date of filing: 05.03.2021
(51) Int. Cl.: B60R 16/023, H01H 85/00, H02G 15/115

(54) **ELECTRICAL SPLICE CONNECTOR**
ELEKTRISCHER SPLEISSVERBINDER
CONNECTEUR D'ÉPISSURE ÉLECTRIQUE

(43) Date of publication of application: 07.09.2022
(73) Proprietor: Aptiv Technologies AG, 8200 Schaffhausen (CH)
(72) Inventor: WOESTE, Guido, 58332 Schwelm (DE); FOHS, Alfred, 46149 Oberhausen (DE); MERTLER, Oliver, 40591 Düsseldorf (DE)
(74) Representative: Manitz Finsterwald Patent- und Rechtsanwaltspartnerschaft mbB

(56) References cited:
- WO-A1-2011/120748
- WO-A1-2017/032762
- US-A1- 2003 205 398
- US-A1- 2020 185 865

## Description

### FIELD

The present disclosure relates to an electrical splice connector for high voltage applications, which is configured to be used in a vehicle electrical system as a power distributor connecting a power supply, typically a high voltage battery, to a main electric consumer and at least one secondary electric consumer of the electric vehicle.

### BACKGROUND

Connecting a main electric consumer and at least one secondary electric consumer of an electric vehicle to a power supply is commonly realized using electrical splice connectors or electrical distribution boxes. Often, these power distribution devices are designed for 1-way electrical connections, i.e., typically two distribution devices are required for realizing an electrical splice in a 2-way electrical circuit. In case the secondary electric consumer has a lower current requirement and a smaller cable cross section than the main electric consumer, fuse boxes are added to the arrangement in order to provide fuse protection of the secondary electric consumer. In this way, not only the number of components and the space required for the connection arrangement increase, but also the number of processing steps required for assembly and thus, the costs of the electrical splice connector. Furthermore, the electromagnetic compatibility of the electrical splice connector is often an issue, in particular, when the + and - wires are conducted through separate electrical splice connectors spanning large areas between them.

US 2003/0205398 A1 discloses a high-voltage vehicle electrical system including an electrical splice connector according to the preamble of claim 1. US 2020/0185865 A1 discloses a junction connector comprising main electrical lines connected to secondary electrical lines. WO 2011/120748 A1 discloses a busbar for power distribution in vehicles comprising at least one fastening region for fuses.

Accordingly, and in particular due to increasing production volumes in the field of electrical vehicles, there is a need for automatable electrical connection solutions, which are cost-efficient as well as space-efficient while providing sufficient electromagnetic compatibility and the flexibility to adapt the electrical connection to the customer requirements.

### SUMMARY

The present disclosure provides a high-voltage vehicle electrical system including an electrical splice connector according to the independent claim. Embodiments are set out in the dependent claims, the description and the drawings.

According to a first aspect, the present disclosure is directed at an electrical splice connector for high voltage applications in a vehicle electrical system. The electrical splice connector comprises first and second main electrical lines, wherein the first main electrical line comprises a first terminal section, and the second main electrical line comprises a second terminal section. The electrical splice connector further comprises first and second secondary electrical lines, wherein the first secondary electrical line has a first end portion which is connected to the first main electrical line at the first terminal section, and the second secondary electrical line has a second end portion which is connected to the second main electrical line at the second terminal section. The electrical splice connector comprises at least one of a first fuse which is arranged between the first end portion and the first main electrical line and a second fuse which is arranged between the second end portion and the second main electrical line. A housing accommodates the first and second terminal sections, the first and second end portions and the at least one fuse. In the electrical splice connector according to the present disclosure, the first and second main electrical lines are arranged at least substantially symmetrically. Likewise, the first and second secondary electrical lines are arranged at least substantially symmetrically. Furthermore, the first and second secondary electrical lines have a smaller cable cross section than the first and second main electrical lines.

Generally, the electrical splice connector according to the present disclosure is configured to connect first and second main electrical lines with corresponding first and second secondary electrical lines, respectively, while providing fuse protection for one or both of the secondary electrical lines. This eliminates the need for one or more additional fuse boxes, saving space, parts, assembly steps and costs.

In the context of this disclosure, if a component is said to be connected to another component, the connection between the components may either be established by bringing the respective components into direct contact with each other or by electrically connecting them with each other indirectly via additional components, e.g. by connecting both to the same fuse or another conducting component. This may apply to the connection of individual components of the electrical splice connector itself as well as to connections between the electrical splice connector and external components connected thereto.

In an embodiment, direct connections between electrical wires or wire portions, fuses, terminal sections and end portions may be established by welding, soldering, crimping, brazing or related methods. Alternatively, plug-in connections may be provided for connecting the individual components of the electrical splice connector with each other or for connecting the electrical splice connector with external components. Furthermore, it is also possible that some connections are plug-in connections, while other connections are welded, soldered, crimped or similar.

Typically, the first and second main electrical lines comprise first and second main input portions and first and second main output portions, respectively. The first main input portion and the first main output portion are connected to each other at the first terminal section of the first main electrical line. The second main input portion and the second main output portion are connected to each other at the second terminal section of the second main electrical line.

The electrical splice connector may be adapted to various cable types, terminal types, voltage ranges and power loads by adjusting the conductor cross section of the first and second main and secondary electrical lines. The electrical splice connector according to the present disclosure may be used for high voltages, for example between 60 V and 1 kV or even up to 1.5 kV or 2.5 kV, while also lower power applications are possible. The electrical splice connector works with multicore cables as well as single wires and also with metal busbars.

One single housing, typically made from an electrically insulating material, encloses all electrical contact sites of the electrical splice connector, i.e., the first and second terminal sections of the first and second main electrical lines, the first and second end portions of the first and second secondary electrical lines and their respective contact sites with the first and second fuse. Sections of the main and secondary electrical lines adjacent to the electrical contact sites may also be enclosed within the housing. Accommodation of the first as well as second main and secondary electrical lines inside the same housing is highly efficient with regard to space requirements, parts needed, assembly steps and costs. In order to provide a touch-proof as well as waterproof electrical splice connector, a suitable sealing means may be comprised in the housing and/or at the electrical lines.

According to the present disclosure, the layout of the electrical splice connector allows the first and second main electrical lines to be arranged in an at least substantially symmetric geometry. In the context of the present disclosure, the at least substantially symmetric geometry includes the meaning that both the first and second main electrical lines extend in substantially the same direction and/or follow a similar route or a mirrored route for at least a considerable part of their length inside the electrical splice connector. Deviations from a similar route may occur in sections where fuses or electrical contacts are located, or where bends are necessary in the route. In particular, the electrical splice connector may be designed to route the first and second main electrical lines in close spatial proximity to each other, minimizing the area spanned between them, thereby also minimizing the space required.

The same applies to the first and second secondary electrical lines, which are also arranged at least substantially symmetrically, which also includes the meaning that both the first and second secondary electrical lines follow a similar route or a mirrored route for at least a considerable part of their length inside the electrical splice connector, with deviations possibly occurring where fuses or electrical contacts are located, or where bends are necessary in the route. In particular, the first and second main electrical lines may be in close spatial proximity to each other where possible, minimizing the area spanned between them and thus the space required.

Such an at least substantially symmetrical arrangement of the first and second main and secondary electrical lines, respectively, helps to prevent significant differences in the length of the corresponding electrical lines.

Also, the electromagnetic compatibility of the electrical splice connector will be substantially improved by the pairwise symmetric arrangement of the first and second main electrical lines and of the first and second secondary electrical lines, as magnetic fields emanating from the electrical splice connector will be reduced substantially, in particular when the first and second main electrical lines and/or the first and second secondary electrical lines are pairs of associated + and - conductors of a two-way electric circuit.

In an embodiment, the first and second main input portions are configured to be connected to a power supply such as a high voltage battery, in particular to the + and - pole of the battery, respectively, while the first and second main output portions are configured to be connected to a main electric consumer such as an electric motor. Connecting the first and second main electrical lines to two poles of a power supply, the electrical splice connector according to the present disclosure may serve as a two-way electrical splice connector.

The first and second secondary electrical lines may be configured to be connected to a secondary electric consumer. In one embodiment, the secondary electric consumer has a lower current requirement and the secondary electrical lines have a smaller cable cross section than the main electrical lines.

Due to the space-efficient symmetric design of the electrical splice connector, the first and second main electrical lines as well as the first and second secondary electrical lines may be fitted into a known housing which usually accommodates only one main electrical line and one secondary electrical line. Thus, a two-way electrical connection may be accommodated in a single known housing, while previously two housings were necessary. Apart from saving space and costs for components, this simplifies the assembly process of the electrical splice connector, as many assembly steps can be carried out in parallel for the first and second electrical lines.

Furthermore, the electrical splice connector according to the present disclosure may be designed such that the first and second main electrical lines and/or the first and second secondary electrical lines are arranged in a way that after exiting the housing of the electrical splice connector they are substantially parallel or symmetrical to each other outside the housing. This extends the optimized electromagnetic compatibility of the electromagnetic splice connector to sections of the electrical lines adjacent to the electrical splice connector housing.

According to an embodiment, the electrical splice connector further comprises at least third and fourth secondary electrical lines, which are arranged at least substantially symmetrically. The at least third and fourth secondary electrical lines may have third, fourth and, if applicable, further end portions, respectively, which are connected to the first main electrical line at the first terminal section, and to the second main electrical line at the second terminal section, as described for the first and second secondary electrical lines. Typically, these end portions are connected to the first and second electrical lines in an alternating manner, e.g., the third secondary electrical line is connected to the first main electrical line, the fourth secondary electrical line is connected to the second main electrical line, etc. The third, fourth and further secondary electrical lines may have the same properties as the first and second secondary electrical lines, e.g. regarding fuse protection, symmetry of arrangement, accommodation in the same housing, etc.

By adding additional secondary electrical lines, e.g. with suitable conductor cross sections and fuses, the electrical splice connector according to the present disclosure may be adapted to the number of secondary electric consumers and their respective current requirements. Blind caps may be used to easily reduce the number of accessible secondary electrical lines for a given electrical splice connector layout if needed.

The at least substantially symmetrical arrangement of the secondary electrical lines may include that all or an arbitrary subset of the first, second, third, fourth, and further secondary electrical lines are arranged at least substantially symmetrical with respect to each other. For example, second and third secondary electrical lines may be arranged symmetrically to each other, and/or first and fourth secondary electrical lines may be arranged symmetrically to each other. Also, all secondary electrical lines may be arranged in an at least substantially symmetrical geometry. This may in particular be of relevance in designs of the electrical splice connector, where crossing over of electrical lines, in particular of secondary electrical lines, occurs.

In another embodiment, the electrical splice connector comprises at least one additional main electrical line, e.g. a third, fourth, or further main electrical line. These additional main electrical lines may have the same properties as the first and second main electrical lines. In particular, such additional main electrical lines may be relevant for multipolar electrical splice connectors.

In a further embodiment, the first and second main electrical lines are arranged at least substantially parallel to each other. Likewise, the first and second secondary electrical lines may be arranged at least substantially parallel to each other. Deviations from a strictly parallel arrangement of the electrical lines may occur in particular around electrical connections, around crossings of electrical lines, around bends in the electrical lines, and/or around fuses.

Pairwise parallel routing of the first and second main and the first and second secondary electrical lines allows to bring the lines into very close proximity, thereby optimizing the electromagnetic compatibility while saving space and cost. The third and forth as well as further secondary electrical lines may be arranged at least substantially parallel as well, either parallel to each other or parallel to any one of the other secondary electrical lines.

According to an embodiment, all of the main electrical lines and all of the secondary electrical lines are arranged at least substantially parallel to each other, optimizing the overall space requirement of the electrical splice connector and the electromagnetic compatibility.

In another embodiment, the first and second main electrical lines are arranged at least substantially parallel to each other and the first and second secondary electrical lines are arranged at least substantially parallel to each other, wherein the first and second secondary electrical lines are arranged non-parallel to the first and second main electrical lines. In particular, the first and second secondary electrical lines may be arranged generally perpendicular to the first and second main electrical lines.

In a further embodiment, the first and second end portions of the secondary electrical lines are directly connected to the first and second terminal sections of the first and second main electrical lines, in particular, if no fuse is required at the respective secondary electrical line. In this embodiment, the first and second main electrical lines may be continuous pieces of wire with the first and second terminal sections each defined by a section of stripped wire. This simple electrical splice connector layout helps saving parts and cost.

In a further embodiment, the first main electrical line and the first secondary electrical line are electrically insulated from the second main electrical line and the second secondary electrical line, defining first and second voltage layers which may have different electrical potentials. Further secondary electrical lines can each be part of one or the other voltage layer. The electrical insulation between the voltage layers may be provided at least partially by the insulation of the electrical lines themselves. In order to insulate the voltage layers against each other even better, additional electrically insulating material may be inserted in between the voltage layers, e.g. plastic, elastomer and/or ceramic material.

In an embodiment, the first main electrical line and the first secondary electrical line are electrically insulated from the second main electrical line and the second secondary electrical line by an insulation sheet or a deep-drawn insulation layer. Such insulation sheet or deep-drawn insulation layer may easily be adapted to the layout of the electrical splice connector and is conveniently placed between voltage layers during assembly of the electrical splice connector. Insulation sheets may be stamped from plastic or elastomer material or made from ceramic material. Deep-drawn insulations layers may be thermoformed, in particular from plastic material, which is cheaper than injection molding. The insulation sheet or deep-drawn insulation layer may have guiding means, e.g., elevated structures or grooves, which hold the first and/or second main and/or secondary electrical lines in place. Such guiding elements may, e.g., be positioned on two opposing sides of the insulation layer for guiding the electrical lines of different voltage layers.

In a further embodiment, at least one of the first and second terminal sections comprises a sheet metal part defining a connection portion configured to be connected to one of the first and second main electrical lines, and another connection portion configured to be connected to one of the first and second end portions. In an embodiment, the first and/or second main electrical line connected to the sheet metal part may include separate pieces of wire serving as main input and main output portions, each of which is connected to a connection portion of the sheet metal part. In another embodiment, the first and/or second main electrical lines may comprise a continuous piece of wire having a section of stripped wire, to which a connection portion of the sheet metal part is connected.

The respective other connection portion of the sheet metal part may be connected to at least one end portion either directly or via a fuse. If third, fourth and further secondary electrical lines are present, this connection portion may be connected to more than one end portion. The first and second main electrical lines may each comprise a sheet metal part. These sheet metal parts may have the same shape, which reduces the number of different components needed for the electrical splice connector.

The sheet metal part may have an arbitrary shape depending on the desired layout of the electrical splice connector. For example, the sheet metal part may have the shape of a metal strip or, alternatively, may be T-, t-, X-, H-, h-, Y-, y-shaped. It may also be bent into a 3-dimensional structure. The number and orientation of connection portions of the sheet metal part may, for example, be adapted by choosing a suitable punching die. Adaptions may be made regarding the number of secondary electrical lines, the number of fuses, the type of electrical terminals to which an electrical contact needs to be established, the directions into which the secondary electrical lines need to be oriented, etc. By adjusting the conductor cross section, adaption to various voltage ranges and power loads is achieved.

The sheet metal part may be connected to the corresponding main electrical line, end portions, and/or fuses or holders by welding, soldering, crimping or brazing. At least one of these connections may also be a plug-in connection, e.g., including a blade-type terminal.

According to an embodiment of the present disclosure, the sheet metal part forms a fuse. In particular, the sheet metal part may comprise an integrated stamped metal structure serving as a melting fuse, the stamped metal structure having a reduced cross-sectional area in comparison to adjacent sections of the sheet metal part. Such a melting fuse may easily be integrated during punching the sheet metal part from sheet metal material with a suitable punching die. This eliminates the need for additional fuses, saving not only costs but also reducing the number of assembly steps. In case the fuse blows, the sheet metal part or the whole wiring harness portion comprising the fuse needs to be replaced.

In another embodiment, at least one of the first end portion, the second end portion, the first terminal section and the second terminal section is configured to hold the fuse in a replaceable manner. The electrical splice connector may comprise at least one fuse holder configured to hold the at least one fuse, e.g. any commercially available fuse like a melting fuse. The fuse may be screwed, clicked or plugged into the fuse holder. In particular, the fuse may be screwed to a corresponding end portion and/or terminal section, which may have respective screw mounts, providing the option of exchanging the fuse in case it blows.

According to an embodiment, the electrical splice connector further comprises at least one shielding means located between an outer surface of the housing and the main and secondary electrical lines. If applicable, the shielding means may also at least partially enclose third, fourth or further secondary electrical lines. The shielding means may comprise a highly conductive material, e.g., a metal sheet, a wire mesh or the like, shaped to cover the main and secondary electrical lines and the at least one fuse. The shielding means may be connected to the conductor shields of the first and/or second main and/or secondary electrical lines in order to provide a good electromagnetic compatibility and a continuous electromagnetic shielding of the electrical splice connector.

The shielding means may comprise at least one electrically conducting shielding sheet which is arranged at least generally parallel to a main extension plane of the main and secondary electrical lines. For example, the shielding sheet may be a deep-drawn metal part. According to an embodiment, the shielding means comprises two shielding sheets, in particular top and bottom shielding sheets arranged parallel to and at least partially enclosing the main and secondary electrical lines. The top and bottom shielding sheets may each comprise several shielding sheet parts, in particular in order to allow for a simplified assembly of the splice connector. Alternatively, the top and bottom shielding sheets may be connected to form one shielding sleeve. Additional shielding sheets may be positioned in between individual voltage layers of the electrical splice connector.

According to an embodiment, the housing of the electrical splice connector is formed by one of overmolding, foaming and mold casting, in particular in a single step and after assembly of the wire harness of the electrical splice connector. The contour of the housing may be shaped closely around the first and second terminal sections, the first and second end portions and the at least one fuse as well as adjacent sections of the main and secondary electrical lines, if desired, resulting in a space-saving electrical splice connector contour and a manipulation-proof and safe electrical connection. A plastic or elastomer material may be used as a housing material, e.g. polyurethane. The housing material may also be injected in between the voltage layers of the electrical splice connector as means for providing electrical insulation. In this manner, a touch-proof and waterproof housing may be formed meeting the safety requirements for high voltage applications, in particular without the need for additional sealing elements.

According to a different embodiment, the housing comprises two separate housing parts which are connected to each other by means of a snap lock or a click connection. The housing may comprise two half shells, in particular of a plastic material, whose separation line extends in a plane parallel to the main and secondary electrical lines or perpendicular thereto. The housing can either be designed to be reopened after assembly so that repairs and maintenance of the electrical splice connector are possible. Alternatively, the housing can be designed so that it cannot be opened again after assembly without causing damage, making the electrical splice connector particularly tamper-proof.

During assembly of the electrical splice connector, the housing parts may be slid over the fully assembled wire harness of the electrical splice connector and locked as a final assembly step. In other embodiments, the housing may comprise more than two separate parts that together make up the complete housing. Alternatively, the housing may comprise two half shells which are attached to each other in a foldable manner, e.g., by a hinge, in particular a film hinge made of the housing material.

In order to provide a touch-proof and watertight electrical splice connector, the housing may be provided with sealing means, in particular to seal off individual parts of the housing, but also the entry points of the electrical lines.

According to an embodiment, at least one of the main and secondary electrical lines comprises a connection header having at least one connection terminal, configured to establish a plug-in connection, for example with a power supply or electric consumer. The connection header may be formed by housing section accommodating the at least one connection terminal and defining a plug-in receptacle. If needed, a power supply or electrical consumer may be plugged into the electrical splice connector via the connection header.

In one embodiment, the first and secondary electrical lines are terminated by connection terminals located in a plug-in receptacle of a connection header. The same may apply to third, fourth and further secondary electrical lines. In this embodiment, the connection headers may be used to plug in at least one secondary electric consumer to the secondary electrical lines. If less secondary consumers are required than connection headers are available, the remaining connection headers may be sealed by blind caps, e.g., of rubber or plastic material, which may be electrically insulating, waterproof and/or touch-proof.

The electrical splice connector according to the present disclosure is of a modular design, i.e., required functionalities like shielding, fusing, or additional control and safety functions may be added depending on the respective application. In particular, shielding or insulating components may be added to the wire harness of the electrical splice connector as layers of a sandwich-like structure during the assembly process, before enclosing the electrical splice connector in a housing. The electrical splice connector is scalable with regard to the power loads of the power supply and/or electric consumers, the number of secondary electric consumers as well as the number of fuses, which may be used to protect, e.g., each load or each voltage layer.

As the electrical splice connector according to the present disclosure requires very basic parts, like common fuses, stamped metal parts, known housings, etc. and as it realizes two voltage layers in one construction, which may be manufactured in the same process flow, the assembly process can easily be fully automated while significantly reducing the number of components and process steps for obtaining a two-way electrical splice connector.

### DRAWINGS

Exemplary embodiments and functions of the present disclosure are described herein in conjunction with the accompanying drawings.
- Fig. 1: shows an electrical splice connector according to the present disclosure exemplarily installed in an electric vehicle.
- Fig. 2: shows an electrical splice connector according to an embodiment of the present disclosure.
- Fig. 3: shows a wire harness of an electrical splice connector having replaceable fuses according to a further embodiment of the present disclosure.
- Fig. 4: shows a wire harness of an electrical splice connector having stamped metal fuses according to another embodiment of the present disclosure.
- Fig. 5A: shows a first step in the assembly of an electrical splice connector including a deep-drawn insulation layer according to another embodiment of the present disclosure.
- Fig. 5B: shows a second step in the assembly of the electrical splice connector of Fig. 5A.
- Fig. 5C: shows the assembled electrical splice connector of Fig. 5A and 5B in a top view and a cross sectional view.
- Fig. 6A: shows a first step in the assembly of an electrical splice connector including insulation means and shielding means according to further embodiments of the present disclosure.
- Fig. 6B: shows a second step in the assembly of the electrical splice connector of Fig. 6A using two alternative insulation means.
- Fig. 6C: shows a third step in the assembly of the electrical splice connector of Fig. 6A using two alternative shielding means.
- Fig. 6D: shows the assembled electrical splice connector of Fig. 6A in a top view and a cross sectional view.
- Fig. 7A: shows a first step in the assembly of an electrical splice connector having a pluggable connection header according to another embodiment of the present disclosure.
- Fig. 7B: shows a second step in the assembly of the electrical splice connector of Fig. 7A.
- Fig. 7C: shows a third step in the assembly of the electrical splice connector of Fig. 7A and a cross-sectional view of the electrical splice connector.
- Fig. 8A: shows a wire harness of an electrical splice connector having two fuses and two sheet metal parts according to another embodiment of the present disclosure.
- Fig. 8B: shows a wire harness of an electrical splice connector having one fuse and two sheet metal parts according to another embodiment of the present disclosure.
- Fig. 8C: shows a wire harness of an electrical splice connector having one fuse and one sheet metal part according to another embodiment of the present disclosure.
- Fig. 9: shows a wire harness of an electrical splice connector having two fuses and without a sheet metal part according to another embodiment of the present disclosure.
- Fig. 10A: shows a wire harness of an electrical splice connector configured to be connected to two secondary loads without a sheet metal part according to another embodiment of the present disclosure.
- Fig. 10B: shows a wire harness of an electrical splice connector configured to be connected to two secondary loads without a sheet metal part with crossing over of secondary electrical lines according to another embodiment of the present disclosure.
- Fig. 11A: shows a wire harness of an electrical splice connector configured to be connected to two secondary loads with one fused potential and crossing over of secondary electrical lines according to another embodiment of the present disclosure.
- Fig. 11B: shows a wire harness of an electrical splice connector configured to be connected to two secondary loads with one fused potential and parallel arrangement of secondary electrical lines according to another embodiment of the present disclosure.
- Fig. 11C: shows a wire harness of an electrical splice connector configured to be connected to two secondary loads with one fused potential and parallel arrangement of secondary electrical lines oriented in opposite directions according to another embodiment of the present disclosure.
- Fig. 12A: shows a wire harness of an electrical splice connector configured to be connected to two secondary loads with two fused potentials and parallel arrangement of secondary electrical lines according to another embodiment of the present disclosure.
- Fig. 12B: shows a wire harness of an electrical splice connector configured to be connected to two secondary loads, having two fused potentials and parallel arrangement of secondary electrical lines running on opposite sides of the main electrical lines according to another embodiment of the present disclosure.
- Fig. 13A: shows an electrical splice connector having a two-part plastic housing according to another embodiment of the present disclosure.
- Fig. 13B: shows an electrical splice connector having a polyurethane housing according to another embodiment of the present disclosure.
- Fig. 13C: shows an electrical splice connector having a polyurethane housing according to a further embodiment of the present disclosure.

### DETAILED DESCRIPTION

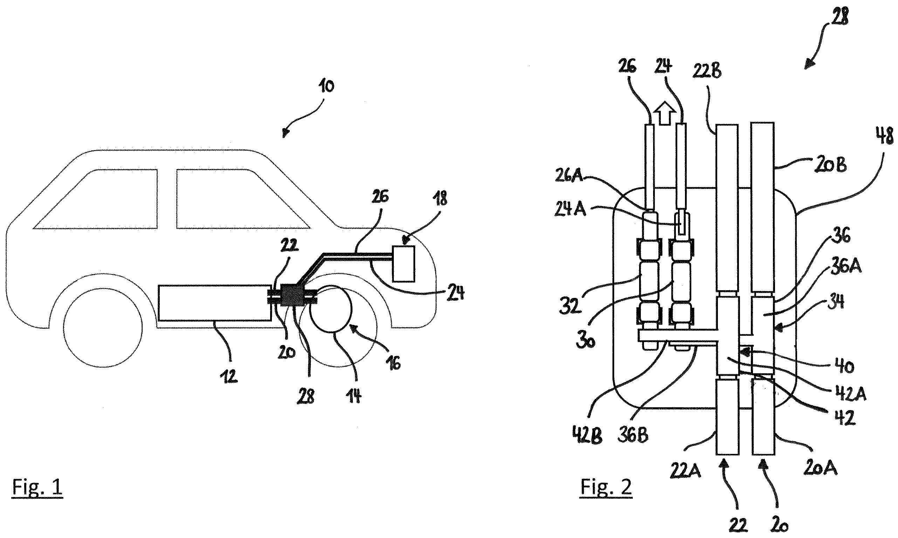

Fig. 1 depicts an electrical vehicle 10, comprising a high voltage battery 12 serving as power source for driving an electric motor 14 as a main electric consumer 16 of the electric vehicle 10. In addition, the battery 12 also supplies a secondary consumer 18. The battery 12 is connected to the electric motor 14 by a first main electrical line 20 and a second main electrical line 22, wherein the first main electrical line is connected to the + pole of the battery 12 and the second electrical line is connected to the - pole of the battery 12. The secondary electric consumer 18 is connected to a first secondary electrical line 24 and second secondary electrical line 26, which are connected to the battery 12 by a splice connection with the first and second main electrical lines 20 and 22, respectively, provided by an electrical splice connector 28.

A schematic view of the electrical splice connector 28 according to an embodiment of the present disclosure is shown in Fig. 2. The first and second main electrical lines 20 and 22 comprise first and second main input portions 20A and 22A leading to the power supply. Via first and second main output portions 20B and 22B, the electrical splice connector 28 is connected to the main electric consumer 16, e.g., the electric motor 14. As the secondary electric consumer 18 has a lower current requirement than the main electric consumer 16, the first and second secondary electrical lines 24 and 26 have a smaller cable cross section than the first and second main electrical lines 20 and 22. Therefore, the secondary electrical lines 24 and 26 are protected by suitable first and second fuses 30 and 32.

The first main electrical line 20 comprises a first terminal section 34, which includes a T-shaped first sheet metal part 36. The first sheet metal part 36 serves as busbar element, having first and second connection portions 36A and 36B. The first connection portion 36A is configured to be connected to the first main electrical line 24. In this embodiment, the first connection portion 36A is designed to connect the the first main input portion 20A to the first main output portion 20B. The second connection portion 36B is configured to establish an electrical connection to the first secondary electrical line 24.

In the embodiment of Fig. 2, this connection is established indirectly via the first fuse 30, which is in electrical contact with the second connection portion 36B of the first sheet metal part 36 and with a first end portion 24A of the first secondary electrical line 24. In this way, the first terminal section 34 of the first main electrical line 20 is connected to the first secondary electrical line 24 while providing fuse protection of the latter.

In the same way, the second main electrical line 22 comprises a second terminal section 40 including a T-shaped second sheet metal part 42 which is identical to the first sheet metal part 36 and which has first and second connection portions 42A and 42B configured to connect the second main input portion 22A to the second main output portion 22B and to establish an electrical connection to the second secondary electrical line 26 via a second fuse 32 and a second end portion 26A of the second secondary electrical line 26, respectively.

The electrical contacts between the first and second sheet metal parts 36 and 42 and the first and second main electrical lines 20 and 22, as well as between the first and second fuses 30 and 32 and the first and second end portions 24A and 26A are established by soldering or welding in the embodiment of Fig. 2.

The core parts of the wire harness of the electrical splice connector 28, i.e., the first and second terminal sections 34 and 40 comprising the first and second sheet metal parts 36 and 42, the first and second end portions 24A and 26A and the first and second fuses 30 and 32 are accommodated in a housing 48, together with adjacent sections of the first and second main and secondary electrical lines 20, 22, 24 and 26. The housing 48 is made from an electrically insulating material and properly sealed, thus providing a waterproof and touch-proof electrical splice connector 28.

In the electrical splice connector 28, pairs of electrical lines are arranged in close proximity with each other and in a substantially symmetric way, i.e., the first and second main electrical lines 20 and 22 form a pair of electrical lines arranged close to each other and at least substantially parallel to each other, and the same applies to the first and second secondary electrical lines 24 and 26. By keeping the distance between the individual electrical lines of a pair of electrical lines as small as possible, the magnetic fields radiated by the respective pair of electrical lines are substantially reduced. In the embodiment of Fig. 2, not only the electrical lines of a pair of electrical lines are oriented parallel to each other, but all of the electrical lines, i.e., the first and second main and secondary electrical lines 20, 22, 24 and 26 are arranged at least substantially parallel to each other, resulting in a space-saving electrical splice connector 28.

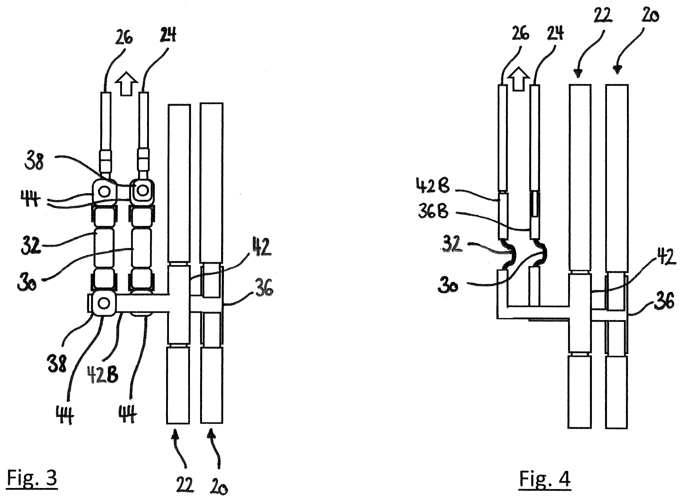

Fig. 3 shows a wire harness of an electrical splice connector 28 with replaceable fuses 30 and 32 according to a further embodiment of the present disclosure. The general layout of the electrical splice connector 28 is very similar to the embodiment of Fig. 2, whereas the first and second fuses 30 and 32 are mounted by means of screwing. For this purpose, the first and second end portions 24A and 26A as well as the second connection portions 36B and 42B are designed as screw terminals 38 to which the fuses 30 and 32 are fixed using corresponding screw mounts 44. In case a fuse blows, it may easily be replaced, while at the same time a correct and manipulation-proof wiring of the electrical splice connector 28 is guaranteed as the first and second main electrical lines 20 and 22 are connected permanently to the first and second sheet metal parts 36 and 42 by welding or soldering.

Fig. 4 shows another embodiment of the wire harness of an electrical splice connector 28 having fuses 30 and 32 formed by the first and second sheet metal parts 36 and 42, respectively. The fuses 30 and 32 are defined by stamped metal structures having a reduced conductor cross section as compared to the adjacent sections of the first and second sheet metal parts 36 and 42, thus serving as melting fuses. In case of a defect, the complete affected sheet metal part 36, 42, the complete affected wire harness portion or even the complete electrical splice connector 28 need to be replaced.

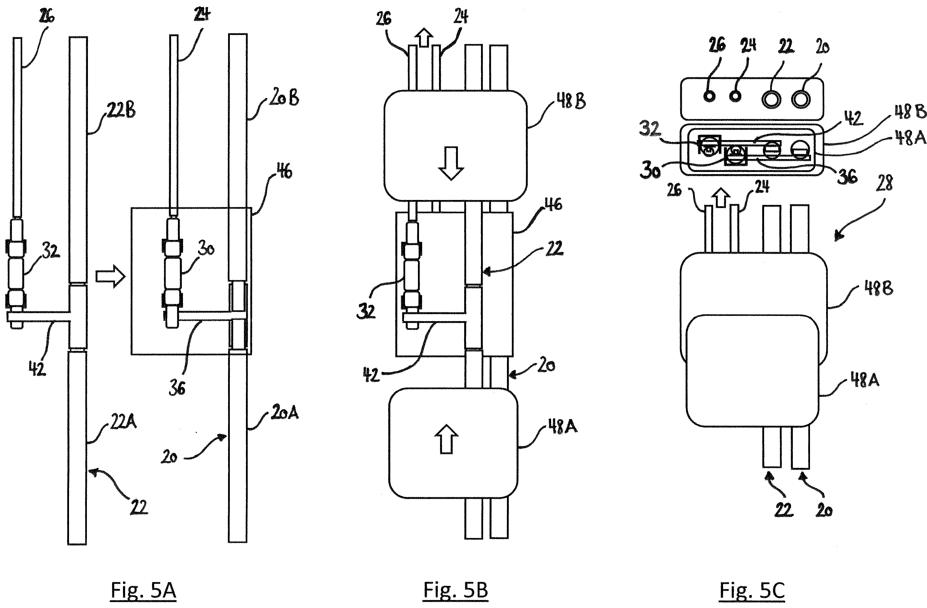

Figs. 5A-5C show the assembly steps for providing an electrical splice connector 28 according to another embodiment of the present disclosure, in which the first main electrical line 20 and the first secondary electrical line 24 are electrically insulated from the second main electrical line 22 and the second secondary electrical line 26 by means of an insulation element 46. The insulation element 46 may be a deep-drawn part made from a plastic material having a size large enough to cover the first and second terminal sections 34 and 40, the first and second end portions 24A and 26A and the first and second fuses 30 and 32.

As shown in Fig. 5A, the first assembly step includes assembly of a first voltage layer comprising the first main electrical line 20 having the first main input portion 20A and the first main output portion 20B connected by the first sheet metal part 36 and further comprising the first fuse 30 and the first secondary electrical line 24.

The first main input and first main output portions 20A and 20B and the first fuse 30 are connected to the top side of the first sheet metal part 36. Once, the components of the first voltage layer are connected, e.g., by welding or soldering, the deep-drawn insulation part 46 is layered on top of the first voltage layer. In order not to obscure the view of the first terminal section 34 the deep-drawn insulation part 46 is depicted transparent in Fig. 5A.

A second voltage layer having a mirrored layout compared to the first voltage layer is assembled, i.e., in the second voltage layer the second fuse 32 and the second main input and output portions 22A and 22B are connected to the bottom side of the second sheet metal part 42. The second voltage layer is arranged on the opposite side of the insulation element 46 from the first voltage layer, i.e., on top of the insulation element 46, as depicted in Fig. 5B. The insulation element 46 may comprise grooves for accommodating both voltage layers and keeping their components in the right place and in a correct relative orientation. In a further embodiment, the insulation element 46 may be flexible, e.g., made from rubber material, so as to adapt to the contours of the voltage layers.

As shown in Fig. 5B, two separate parts 48A and 48B of a housing 48 are slid onto the pre-assembled wire harness of the electrical splice connector 28 along the extension direction of the first and secondary electrical lines 20, 22, 24 and 26. Specifically, the first housing part 48A is mounted on the wire harness first, before cover part 48B is slid over the first housing part 48A and both parts of the housing 48 are connected by means of a snap lock or a click connection.

As shown in Fig. 5C, the housing 48 encloses the insulation element 46 and the relevant parts of the wire harness of the electrical splice connector 28, in particular all sites where electrical contacts are established and adjacent sections of the first and second main and secondary electrical lines 20, 22, 24, and 26. The top cross-sectional view of the electrical splice connector 28 depicts the spatial proximity of the first and second main electrical lines 20 and 22 and of the first and second secondary electrical lines 24 and 26, allowing for optimized electromagnetic compatibility. The bottom cross-sectional view illustrates how the mirrored layout of the first and second voltage layers helps minimizing the space between the individual wires, as it allows the voltage layers to interlock, given that the insulation element 46 is sufficiently flexible or provides appropriate grooves.

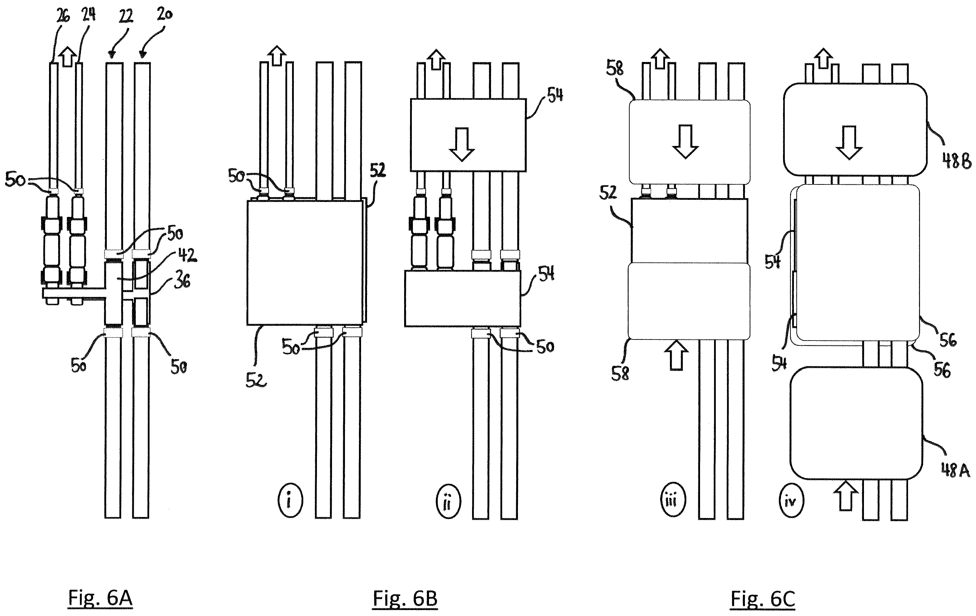

Fig. 6A-6D show the assembly of electrical splice connectors 28 including insulation means and shielding means according to further embodiments of the present disclosure. As depicted in Fig. 6A, the basic layout of the wire harness of the electrical splice connector 28 is similar that of Fig. 5. In the embodiment of Fig. 6, the main and secondary electrical lines 20, 22, 24 and 26 comprise shielded wires having metal ferrules 50 crimped to the respective wire shields of each electrical line adjacent to the first and second end portions 24A and 26A and adjacent to the first and second terminal sections 34 and 40.

Fig. 6B shows a second assembly step of the electrical splice connector 28, in which insulation means are added which at least substantially enclose the wire harness of the electrical splice connector 28. In the embodiment (i) shown on the left, bottom and top insulation sheets 52 are positioned parallel to the main extension plane of the wire harness on both sides of the wire harness. In the embodiment (ii) shown on the right, two insulation sleeves 54 are slid over the wire harness of the electrical splice connector 28 along the extension direction of the main and secondary electrical lines 20, 22, 24 and 26 from opposite sides. In both embodiments, the insulation sheets 52 and insulation sleeves 54 cover all non-insulated parts of the wire harness of the electrical splice connector 28, while keeping the metal ferrules 50 accessible.

Fig. 6C depicts a third assembly step, in which a shielding means is added to the electrical splice connector 28. In the embodiment (iii) shown on the left, two shielding sleeves 58 are slid over the wire harness of the electrical splice connector 28 along the extension direction of the main and secondary electrical lines 20, 22, 24 and 26 from opposite sides, establishing electrical contact to the metal ferrules 50. In the embodiment (iv) shown on the right, bottom and top shielding sheets 56 are positioned parallel to the main extension plane of the wire harness on both sides of the wire harness and adjacent to the insulation sleeves 54. The shielding sheets 56 are brought into electrical contact with the metal ferrules 50 and thus electrically connected to the wire shields. In both embodiments (iii) and (iv), the shielding sheets 56 and shielding sleeves 58 enclose all unshielded parts of the wire harness of the electrical splice connector 28.

As depicted in embodiment (iv) of Fig. 6C, once the insulation as well as shielding means are in place, a housing 48 is installed as described before. The fully assembled electrical splice connector 28 has the same outside appearance as the one shown in Fig. 5C, but having top and bottom shielding sheets 56 located between the outer surface of the housing 48 and the first and second main electrical lines 20, 22 and the first and second secondary electrical lines 24, 26.

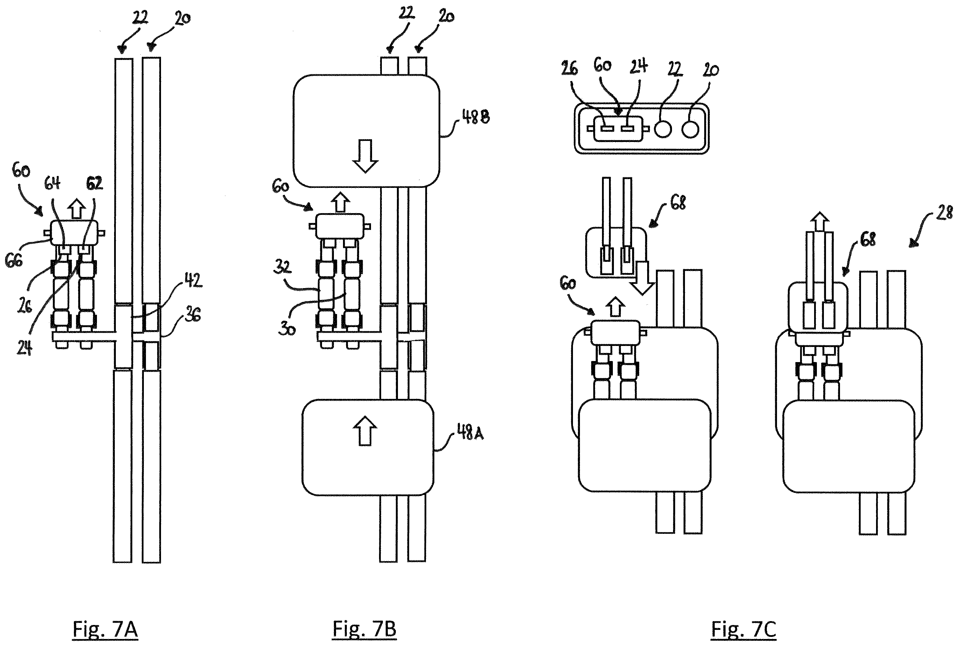

Figs. 7A-7D depict the assembly of an electrical splice connector 28 with a pluggable connection header 60 according to another embodiment of the present disclosure. The general layout of the wire harness is the same as shown in Figs. 5 and 6. However, the first and second secondary lines 24 and 26 are basically reduced to their first and second end portions 24A and 26A made from sheet metal material and forming blade-type first and second connection terminals 62 and 64.

The first and second connection terminals 62 and 64 are enclosed by a plug-in receptacle 66 formed from plastic material. The connection header 60 is configured to establish a plug-in connection with, e.g., a secondary electric consumer 18. A housing 48, e.g., comprising two parts 48A and 48B, is installed as described before and as depicted in Fig. 7B, whereas the second part 48B of the housing has a cutout (not shown) for accommodating the connection header 60.

Fig. 7C shows the fully assembled electrical splice connector 28 with the connection header 60 connected to a plug-in splice connector 68, e.g., of a secondary electrical consumer 18. If not needed, the connection header 60 may be sealed using a plastic or rubber blind cap (not shown).

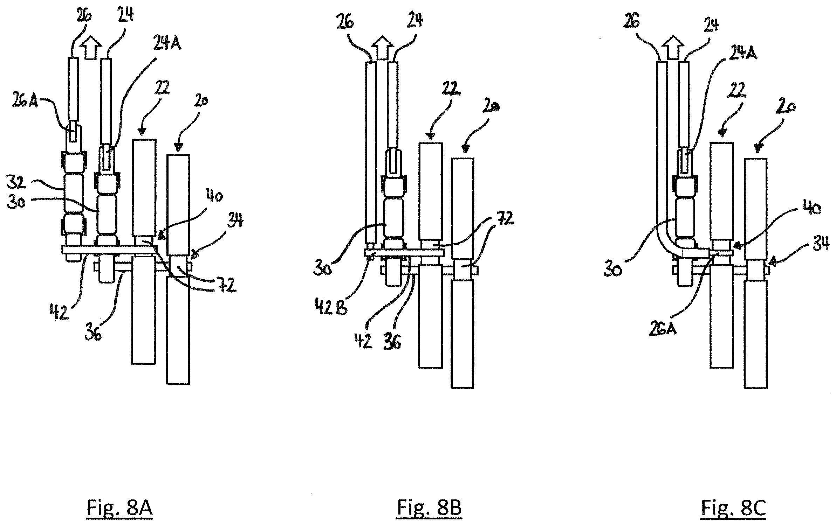

The variability with regard to the layout of the electrical splice connector 28 is illustrated exemplarily in Figs. 8A-8D. As depicted in Fig. 8A, instead of using T-shaped first and second sheet metal parts 36 and 42, even simpler strip-shaped first and second sheet metal parts 36 and 42 may be used. In the embodiments of Fig. 8A-8C, the first and second main electrical lines 20 and 22 are continuous electrical wires, whose first and second terminal sections 34 and 40 each include a section of stripped wire 72 to which the first connection portions 36A and 42A of the first and second sheet metal parts 36 and 42 are connected, respectively. This eliminates the need for cutting and reconnecting the first main input 20A and first main output 20B as well as the second main input 22A and second main output 22B.

The embodiment of Fig. 8B differs from the one of Fig. 8A insofar as only the first secondary electrical line 24 is protected by a first fuse 30, while the second secondary electrical line 26 is directly connected to the second connection portion 42B of the second sheet metal part 42.

The embodiment of Fig. 8C differs from the one of Fig. 8B insofar as the second sheet metal part 42 is omitted and the end portion 26A of the second secondary electrical line 26 is directly connected to the terminal section 40 of the second main electrical line 22. Although the second secondary electrical line 26 includes a bend, and the first secondary electrical line 24 does not, the first and second secondary electrical lines 24 and 26 are guided still at least substantially parallel to each other. In particular, they are guided into close spatial proximity and onto parallel paths beyond the bend and the fuse as quickly as possible.

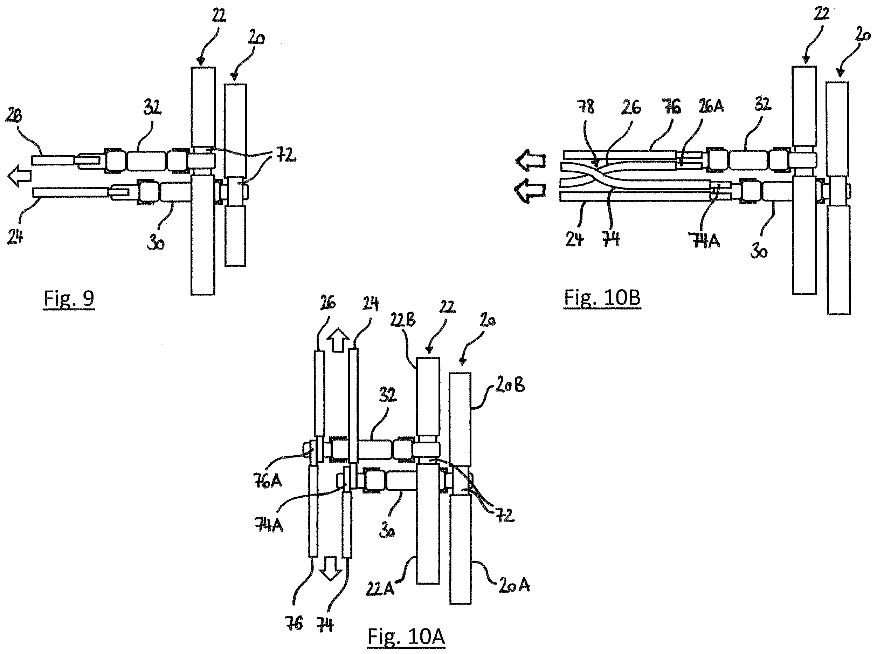

Fig. 9 depicts a wire harness layout of an electrical splice connector 28 not having any sheet metal part. The first and second fuses 30 and 32 are directly connected to the first and second main electrical lines 20 and 22, respectively, in stripped wire sections 72 defining the first and second terminal sections 34 and 40. This kind of connection is commonly referred to as a center splice. While the first and second main electrical lines 20 and 22 are arranged parallel to each other and the first and second secondary electrical lines 24 and 26 are also arranged parallel to each other, the pair of first and second secondary electrical lines 24 and 26 are arranged non-parallel and specifically perpendicular to the pair of first and second main electrical lines 20 and 22.

Figs. 10A-10B depict embodiments of a wire harness comprising additional third and fourth secondary electrical lines 74 and 76, which are configured to be connected to an additional secondary electrical consumer 18, while providing fuse protection for all secondary electrical lines 24, 26, 74, 76. All secondary electrical lines 24, 26, 70, 76 are arranged at least substantially symmetrically with respect to each other. As in Fig. 9, first and second fuses 30 and 32 are directly connected to stripped wire sections 72 of the first and second main electrical lines 20 and 22, respectively.

In the embodiment of Fig. 10A, first and second secondary electrical lines 24 and 26 are connected with their first and second end portions 24A and 26A directly to the first and second fuses 30 and 32, respectively, such that the first and second secondary electrical lines 24 and 26 extend parallel to each other and parallel to the direction of the first and second main outputs 20B and 22B. The third and fourth secondary electrical lines 74 and 76 comprise third and fourth end portions 74A and 76A, respectively, which are connected directly to the first and second fuses 30 and 32, respectively, such that the third and fourth secondary electrical lines 74 and 76 extend parallel to each other and parallel to the direction of the first and second main inputs 20A and 22A.

In the embodiment of Fig. 10B, the first, second, third and fourth secondary electrical lines 24, 26, 74 and 76 are also connected directly to the first and second fuses 30 and 32. The secondary electrical lines 24, 26, 74 and 76 are oriented at least substantially perpendicular to the extension direction of the first and second main electrical lines 20 and 22. The first fuse 30 is connected to the first secondary electrical line 24 and to the third secondary electrical line 74, while the second fuse 32 is connected to the second secondary electrical line 26 and to the fourth secondary electrical line 76. Thus, in order to bring the pairs of corresponding secondary electrical lines, i.e., the first and second secondary electrical lines 24 and 26 and the third and fourth secondary electrical lines 74 and 76, back together and route them to their respective secondary electric consumers 18, a crossing over of at least two secondary electrical lines is required.

In the embodiment of Fig. 10B, the second and third secondary electrical lines 26 and 74 cross over each other in a crossing point 78 as close to the second and third end portions 26A and 74A as possible. This helps to ensure a space-saving design of the electrical splice connector 28 on the one hand. On the other hand, the area spanned between corresponding pairs of secondary electrical lines is minimized and thus, the emergence of magnetic fields from the secondary electrical lines 24, 26, 74 and 76 can be minimized as well, in particular if corresponding secondary electrical lines have opposite electrical polarities. Beyond the crossing point 78, the pairs of first and second secondary electrical lines 24 and 26 and of third and fourth secondary electrical lines 74 and 76 are guided in close proximity to each other and parallel to each other. In this embodiment, the secondary electrical lines form an arrangement in which the first and second secondary electrical lines 24 and 26 follow a mirrored route of the third and fourth secondary electrical lines 74 and 76. This mirrored arrangement is considered at least substantially symmetrical.

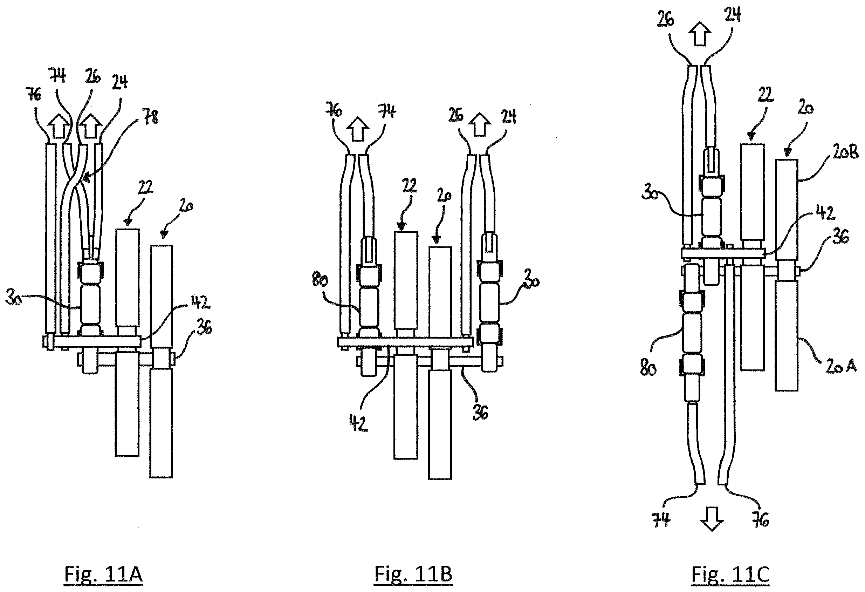

Figs 11A-11C show embodiments of a wire harness for an electrical splice connector 28 configured for two secondary electrical consumers 18 having only one fused potential each. In all cases, all secondary electrical lines 24, 26, 74 and 76 are connected to the first and second terminal sections 34 and 40 via strip-shaped sheet metal parts 36 and 42 and extend along the extension direction of the first and second main electrical lines 20 and 22.

The embodiment of Fig. 11A provides fuse protection of both secondary electrical consumers 18 using only a first fuse 30, thus requiring crossing over of the second and third secondary electrical lines 26 and 70 in a crossing point 78 as described in connection with Fig. 10B.

The embodiments of Figs. 11B and 11C each rely on a first and a third fuse 30 and 80 for providing fuse protection to the first and third secondary electrical lines 24 and 74, respectively, thus avoiding crossings of electrical lines. The electrical splice connector 28 of Fig. 11B comprises first and second strip-shaped sheet metal parts 36 and 42 extending perpendicular across the corresponding first and second main electrical lines 20 and 22 to both sides, allowing an at least substantially parallel arrangement of all secondary electrical lines 24, 26, 74 and 76 along the direction of the first and second main output portions 20B and 22B.

The embodiment of Fig. 11C depicts a wire harness having first and second strip-shaped sheet metal parts 36 and 42 of different lengths which allow an at least substantially parallel arrangement of all secondary electrical lines 24, 26, 74 and 76, wherein the first and second secondary electrical lines 24 and 26 extend into the direction of the main output portions 20B and 22B, while the third and fourth secondary electrical lines 74 and 76 extend in the opposite direction, i.e., in the direction of the main input portions 20A and 22A.

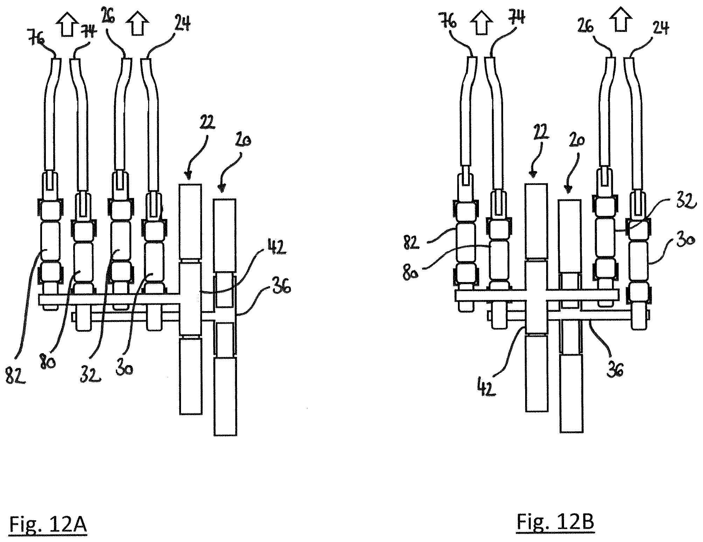

Figs 12A-12B show embodiments of a wire harness for an electrical splice connector 28 configured for two secondary electrical consumers 18 having two fused potentials each. In all cases, all secondary electrical lines 24, 26, 74 and 76 are connected to the first and second terminal sections 34 and 40 via sheet metal parts 36 and 42 and first, second, third and fourth fuses 30, 32, 80, 82, respectively, and extend along the extension direction of the first and second main electrical lines 20 and 22.

Fig. 12A shows T-shaped first and second sheet metal parts 36 and 42, which allow all four secondary electrical lines 24, 26, 74 and 76 to run on the same side of the main electrical lines 20 and 22. Fig. 12B shows t-shaped first and second sheet metal parts 36 and 42, extending across the first and second main electrical lines 20 and 22, respectively, which allow the first and second secondary electrical lines 24 and 26 to run on the opposite side of the main electrical lines 20 and 22 from the third and fourth secondary electrical lines 74 and 76.

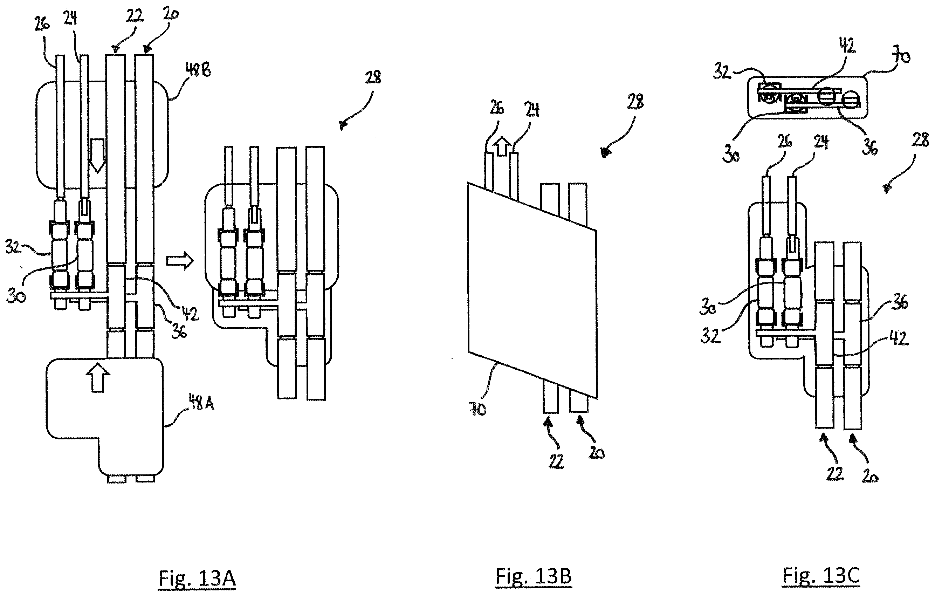

Figs. 13A to 13C show alternative housing options for the electrical splice connector 28 according to the present invention. Fig. 13A depicts a two-part housing 48 made from plastic material, comprising a cover part 48B as shown in Fig. 5 and a first housing part 48A having a housing contour that is adapted to the contour of the wire harness, in particular to the contour of the first and second main input portions 20A and 22A. Thus, the electrical splice connector 28 is even more space-efficient.

In another embodiment, the housing can be formed by overmolding, foaming or mold casting. As an example, Fig. 13B depicts an electrical splice connector 28 having an overmolded housing 70 formed by overmolding of the wire harness with a polyurethane material. In the case of Fig. 13B, the housing has a very simple rhomboid shape, allowing the use of a very basic injection mold. As shown in Fig. 13C, the overmolded housing 70 can alternatively be perfectly adapted to the shape and layout of the wire harness of the electrical splice connector 28 in order to provide optimized space-efficiency as well as a touchproof and watertight housing, potentially without the need for additional sealing elements. Of course, other housing materials except polyurethane may be used for overmolding or foaming, in particular any plastic material that provides electrical insulation.

The properties of all embodiments described may be combined in a modular manner depending on the respective application of the electrical splice connector 28, in particular regarding the number and orientation of secondary electrical lines, the number and shape of sheet metal parts and fuses, shielding and insulation means as well as housing options.

### Reference numerals

- 10: electrical vehicle
- 12: high voltage battery
- 14: electric motor
- 16: main electric consumer
- 18: secondary electric consumer
- 20: first main electrical line
- 20A: first main input portion
- 20B: first main output portion
- 22: second main electrical line
- 22A: second main input portion
- 22B: second main output portion
- 24: first secondary electrical line
- 24A: first end portion
- 26: second secondary electrical line
- 28: electrical splice connector
- 30: first fuse
- 32: second fuse
- 34: first terminal section
- 36: first sheet metal part
- 36A: first connection portion of the first sheet metal part 36
- 36B: second connection portion of the first sheet metal part 36
- 38: screw terminal
- 40: second terminal section
- 42: second sheet metal part 42
- 42A: first connection portion of the second sheet metal part 42
- 42B: second connection portion of the second sheet metal part 42
- 44: screw mounts
- 46: insulation element
- 48: housing
- 48A: first part of the housing
- 48B: second part of the housing
- 50: metal ferrules
- 52: insulation sheet
- 54: insulation sleeve
- 56: shielding sheet
- 58: shielding sleeve
- 60: connection header
- 62: first connection terminal
- 64: second connection terminal
- 66: plug-in receptacle
- 68: plug-in connector
- 70: overmolded housing

- 72: stripped wire section
- 74: third secondary electrical line
- 74A: third end portion
- 76: fourth secondary electrical line
- 76A: fourth end portion
- 78: crossing point
- 80: third fuse
- 82: fourth fuse

## Claims

1. High-voltage vehicle electrical system including an electrical splice connector (28), the electrical splice connector (28) comprising:
first and second main electrical lines (20, 22), the first main electrical line (20) comprising a first terminal section (34), the second main electrical line (22) comprising a second terminal section (40);
first and second secondary electrical lines (24, 26), the first secondary electrical line (24) having a first end portion (24A) which is connected to the first main electrical line (24) at the first terminal section (34), the second secondary electrical line (26) having a second end portion (26A) which is connected to the second main electrical line (26) at the second terminal section (40);
at least one of a first fuse (30) arranged between the first end portion (24A) and the first main electrical line (20) and a second fuse (32) arranged between the second end portion (26A) and the second main electrical line (26); and
a housing (48, 70) accommodating the first and second terminal sections (34, 40), the first and second end portions (24A, 26A) and the at least one fuse (30, 32),
wherein the first and second main electrical lines (20, 22) are arranged at least substantially symmetrically and the first and second secondary electrical lines (24, 26) are arranged at least substantially symmetrically,
wherein the first and second secondary electrical lines (24, 26) have a smaller cable cross section than the first and second main electrical lines (20, 22),
**characterized in that**
the first and second main electrical lines (20, 22) and/or the first and second secondary electrical lines (24, 26) are pairs of associated + and - conductors of a two-way electric circuit.

2. High-voltage vehicle electrical system in accordance with claim 1, further comprising at least third and fourth secondary electrical lines (74, 76), which are arranged at least substantially symmetrically.

3. High-voltage vehicle electrical system in accordance with claim 1 or 2, wherein the first and second main electrical lines (20, 22) are arranged at least substantially parallel to each other, and the first and second secondary electrical lines (24, 26) are arranged at least substantially parallel to each other.

4. High-voltage vehicle electrical system in accordance with any one of the preceding claims,
wherein all of the main electrical lines (20, 22) and all of the secondary electrical lines (24, 26, 74, 76) are arranged at least substantially parallel to each other.

5. High-voltage vehicle electrical system in accordance with claim 3,
wherein the first and second secondary electrical lines (24, 26) are arranged non-parallel to the first and second main electrical lines (20, 22).

6. High-voltage vehicle electrical system in accordance with any one of the preceding claims,
wherein the first main electrical line (20) and the first secondary electrical line (24) are electrically insulated from the second main electrical line (22) and the second secondary electrical line (26).

7. High-voltage vehicle electrical system in accordance with any one of the preceding claims,
wherein the first main electrical line (20) and the first secondary electrical line (24) are electrically insulated from the second main electrical line (22) and the second secondary electrical line (26) by an insulation sheet or a deep-drawn insulation layer (52, 54).

8. High-voltage vehicle electrical system in accordance with any one of the preceding claims,
wherein at least one of the first and second terminal sections (34, 40) comprises a sheet metal part (36, 42) defining a connection portion (36A, 42A) configured to be connected to one of the first and second main electrical lines (20, 22), and another connection portion configured (36B, 42B) to be connected to one of the first and second end portions (24A, 26A).

9. High-voltage vehicle electrical system in accordance with claim 8,
wherein the sheet metal part (36, 42) forms a fuse (30, 32).

10. High-voltage vehicle electrical system in accordance with any one of the preceding claims,
wherein at least one of the first end portion (24A), the second end portion (26A), the first terminal section (34) and the second terminal section (40) is configured to hold the fuse (30, 32) in a replaceable manner.

11. High-voltage vehicle electrical system in accordance with any one of the preceding claims,
further comprising at least one shielding means (56, 58) located between an outer surface of the housing (48, 70) and the main and secondary electrical lines (20, 22, 24, 26, 74, 76).

12. High-voltage vehicle electrical system in accordance with any one of the preceding claims,
wherein the housing (48, 70) is formed by one of overmolding, foaming and mold casting.

13. High-voltage vehicle electrical system in accordance with any one of the preceding claims,
wherein the housing (48) comprises two separate parts (48A, 48B) which are connected to each other by means of a snap lock or a click connection.

14. High-voltage vehicle electrical system in accordance with any one of the preceding claims,
wherein at least one of the main and secondary electrical lines (20, 22, 24, 26, 74, 76) comprises a connection header (60) having at least one connection terminal (62, 64), configured to establish a plug-in connection.

## Patentansprüche

1. Elektrisches Hochspannungsfahrzeugsystem mit einem elektrischen Spleißverbinder (28), wobei der elektrische Spleißverbinder (28) umfasst:
eine erste und eine zweite elektrische Hauptleitung (20, 22), wobei die erste elektrische Hauptleitung (20) einen ersten Anschlussabschnitt (34) umfasst, wobei die zweite elektrische Hauptleitung (22) einen zweiten Anschlussabschnitt (40) umfasst;
eine erste und eine zweite elektrische Nebenleitung (24, 26), wobei die erste elektrische Nebenleitung (24) einen ersten Endabschnitt (24A) aufweist, der mit der ersten elektrischen Hauptleitung (24) an dem ersten Anschlussabschnitt (34) verbunden ist, wobei die zweite elektrische Nebenleitung (26) einen zweiten Endabschnitt (26A) aufweist, der mit der zweiten elektrischen Hauptleitung (26) an dem zweiten Anschlussabschnitt (40) verbunden ist;
eine erste Sicherung (30), die zwischen dem ersten Endabschnitt (24A) und der ersten elektrischen Hauptleitung (20) angeordnet ist, und/oder eine zweite Sicherung (32), die zwischen dem zweiten Endabschnitt (26A) und der zweiten elektrischen Hauptleitung (26) angeordnet ist; und
ein Gehäuse (48, 70), das den ersten und den zweiten Anschlussabschnitt (34, 40), den ersten und den zweiten Endabschnitt (24A, 26A) und die mindestens eine Sicherung (30, 32) aufnimmt,
wobei die erste und die zweite elektrische Hauptleitung (20, 22) mindestens im Wesentlichen symmetrisch angeordnet sind und die erste und die zweite elektrische Nebenleitung (24, 26) mindestens im Wesentlichen symmetrisch angeordnet sind,
wobei die erste und die zweite elektrische Nebenleitung (24, 26) einen kleineren Kabelquerschnitt als die erste und die zweite elektrische Hauptleitung (20, 22) aufweisen,
**dadurch gekennzeichnet, dass**
die erste und die zweite elektrische Hauptleitung (20, 22) und/oder die erste und die zweite elektrische Nebenleitung (24, 26) Paare von zugehörigen (+)- und (-)-Leitern eines elektrischen Zweiwegekreises sind.

2. Elektrisches Hochspannungsfahrzeugsystem nach Anspruch 1,
ferner umfassend mindestens eine dritte und eine vierte elektrische Nebenleitung (74, 76), die mindestens im Wesentlichen symmetrisch angeordnet sind.

3. Elektrisches Hochspannungsfahrzeugsystem nach einem der Ansprüche 1 oder 2,
wobei die erste und die zweite elektrische Hauptleitung (20, 22) mindestens im Wesentlichen parallel zueinander angeordnet sind und die erste und die zweite elektrische Nebenleitung (24, 26) mindestens im Wesentlichen parallel zueinander angeordnet sind.

4. Elektrisches Hochspannungsfahrzeugsystem nach einem der vorhergehenden Ansprüche,
wobei alle elektrischen Hauptleitungen (20, 22) und alle elektrischen Nebenleitungen (24, 26, 74, 76) mindestens im Wesentlichen parallel zueinander angeordnet sind.

5. Elektrisches Hochspannungsfahrzeugsystem nach Anspruch 3,
wobei die erste und die zweite elektrische Nebenleitung (24, 26) nicht parallel zu der ersten und der zweiten elektrischen Hauptleitung (20, 22) angeordnet sind.

6. Elektrisches Hochspannungsfahrzeugsystem nach einem der vorhergehenden Ansprüche,
wobei die erste elektrische Hauptleitung (20) und die erste elektrische Nebenleitung (24) von der zweiten elektrischen Hauptleitung (22) und der zweiten elektrischen Nebenleitung (26) elektrisch isoliert sind.

7. Elektrisches Hochspannungsfahrzeugsystem nach einem der vorhergehenden Ansprüche,
wobei die erste elektrische Hauptleitung (20) und die erste elektrische Nebenleitung (24) von der zweiten elektrischen Hauptleitung (22) und der zweiten elektrischen Nebenleitung (26) durch eine Isolierfolie oder eine tiefgezogene Isolierschicht (52, 54) elektrisch isoliert sind.

8. Elektrisches Hochspannungsfahrzeugsystem nach einem der vorhergehenden Ansprüche,
wobei mindestens einer von dem ersten und dem zweiten Anschlussabschnitt (34, 40) ein Blechteil (36, 42) umfasst, das einen Verbindungsabschnitt (36A, 42A), der konfiguriert ist, um mit einer von der ersten und der zweiten elektrischen Hauptleitung (20, 22) verbunden zu werden, und einen weiteren Verbindungsabschnitt (36B, 42B) definiert, der konfiguriert ist, um mit einem von dem ersten und dem zweiten Endabschnitt (24A, 26A) verbunden zu werden.

9. Elektrisches Hochspannungsfahrzeugsystem nach Anspruch 8,
wobei das Blechteil (36, 42) eine Sicherung (30, 32) bildet.

10. Elektrisches Hochspannungsfahrzeugsystem nach einem der vorhergehenden Ansprüche,
wobei mindestens einer von dem ersten Endabschnitt (24A), dem zweiten Endabschnitt (26A), dem ersten Anschlussabschnitt (34) und dem zweiten Anschlussabschnitt (40) konfiguriert ist, um die Sicherung (30, 32) in einer austauschbaren Weise zu halten.

11. Elektrisches Hochspannungsfahrzeugsystem nach einem der vorhergehenden Ansprüche,
ferner umfassend mindestens ein Abschirmmittel (56, 58), das sich zwischen einer Außenfläche des Gehäuses (48, 70) und der elektrischen Haupt- und Nebenleitung (20, 22, 24, 26, 74, 76) befindet.

12. Elektrisches Hochspannungsfahrzeugsystem nach einem der vorhergehenden Ansprüche,
wobei das Gehäuse (48, 70) durch eines von Umspritzen, Schäumen und Formgießen gebildet ist.

13. Elektrisches Hochspannungsfahrzeugsystem nach einem der vorhergehenden Ansprüche,
wobei das Gehäuse (48) zwei separate Teile (48A, 48B) umfasst, die mittels eines Schnappverschlusses oder einer Klickverbindung miteinander verbunden sind.

14. Elektrisches Hochspannungsfahrzeugsystem nach einem der vorhergehenden Ansprüche,
wobei mindestens eine von der elektrischen Haupt- und der elektrischen Nebenleitung (20, 22, 24, 26, 74, 76) einen Verbindungskopf (60) umfasst, der mindestens einen Verbindungsanschluss (62, 64) aufweist, der konfiguriert ist, um eine Steckverbindung herzustellen.

## Revendications

1. Système électrique haute tension pour véhicule incluant un connecteur électrique à épissure (28), le connecteur électrique à épissure (28) comprenant :
des première et deuxième lignes électriques principales (20, 22), la première ligne électrique principale (20) comprenant une première section de borne (34), la deuxième ligne électrique principale (22) comprenant une deuxième section de borne (40) ;
des première et deuxième lignes électriques secondaires (24, 26), la première ligne électrique secondaire (24) ayant une première partie d'extrémité (24A) qui est connectée à la première ligne électrique principale (24) au niveau de la première section de borne (34), la deuxième ligne électrique secondaire (26) ayant une deuxième partie d'extrémité (26A) qui est connectée à la deuxième ligne électrique principale (26) au niveau de la deuxième section de borne (40) ;
au moins un premier fusible (30) disposé entre la première partie d'extrémité (24A) et la première ligne électrique principale (20) et un deuxième fusible (32) disposé entre la deuxième partie d'extrémité (26A) et la deuxième ligne électrique principale (26) ; et
un boîtier (48, 70) logeant les première et deuxième sections de borne (34, 40), les première et deuxième parties d'extrémité (24A, 26A) et ledit au moins un fusible (30, 32),
dans lequel les première et deuxième lignes électriques principales (20, 22) sont disposées au moins sensiblement symétriquement et les première et deuxième lignes électriques secondaires (24, 26) sont disposées au moins sensiblement symétriquement,
dans lequel les première et deuxième lignes électriques secondaires (24, 26) ont une section de câble plus petite que les première et deuxième lignes électriques principales (20, 22),
**caractérisé en ce que**
les première et deuxième lignes électriques principales (20, 22) et/ou les première et deuxième lignes électriques secondaires (24, 26) sont des paires de conducteurs + et - associés d'un circuit électrique à deux voies.

2. Système électrique haute tension pour véhicule selon la revendication 1,
comprenant en outre au moins des troisième et quatrième lignes électriques secondaires (74, 76) qui sont disposées au moins sensiblement symétriquement.

3. Système électrique haute tension pour véhicule selon la revendication 1 ou 2,
dans lequel les première et deuxième lignes électriques principales (20, 22) sont disposées au moins sensiblement parallèlement l'une à l'autre, et les première et deuxième lignes électriques secondaires (24, 26) sont disposées au moins sensiblement parallèlement l'une à l'autre.

4. Système électrique haute tension pour véhicule selon l'une quelconque des revendications précédentes,
dans lequel toutes les lignes électriques principales (20, 22) et toutes les lignes électriques secondaires (24, 26, 74, 76) sont disposées au moins sensiblement parallèlement les unes aux autres.

5. Système électrique haute tension pour véhicule selon la revendication 3, dans lequel les première et deuxième lignes électriques secondaires (24, 26) sont disposées de manière non parallèle aux première et deuxième lignes électriques principales (20, 22).

6. Système électrique haute tension pour véhicule selon l'une quelconque des revendications précédentes,
dans lequel la première ligne électrique principale (20) et la première ligne électrique secondaire (24) sont isolées électriquement de la deuxième ligne électrique principale (22) et de la deuxième ligne électrique secondaire (26).

7. Système électrique haute tension pour véhicule selon l'une quelconque des revendications précédentes,
dans lequel la première ligne électrique principale (20) et la première ligne électrique secondaire (24) sont isolées électriquement de la deuxième ligne électrique principale (22) et de la deuxième ligne électrique secondaire (26) par une feuille isolante ou une couche isolante emboutie (52, 54).

8. Système électrique haute tension pour véhicule selon l'une quelconque des revendications précédentes,
dans lequel au moins l'une des première et deuxième sections de borne (34, 40) comprend une pièce en tôle (36, 42) définissant une partie de connexion (36A, 42A) configurée pour être connectée à l'une des première et deuxième lignes électriques principales (20, 22), et une autre partie de connexion configurée (36B, 42B) pour être connectée à l'une des première et deuxième parties d'extrémité (24A, 26A).

9. Système électrique haute tension pour véhicule selon la revendication 8, dans lequel la pièce en tôle (36, 42) forme un fusible (30, 32).

10. Système électrique haute tension pour véhicule selon l'une quelconque des revendications précédentes,
dans lequel au moins l'une de la première partie d'extrémité (24A), la deuxième partie d'extrémité (26A), la première section de borne (34) et la deuxième section de borne (40) est configurée pour maintenir le fusible (30, 32) de manière remplaçable.

11. Système électrique haute tension pour véhicule selon l'une quelconque des revendications précédentes,
comprenant en outre au moins un moyen de blindage (56, 58) situé entre une surface extérieure du boîtier (48, 70) et les lignes électriques principales et secondaires (20, 22, 24, 26, 74, 76).

12. Système électrique haute tension pour véhicule selon l'une quelconque des revendications précédentes,
dans lequel le boîtier (48, 70) est formé par surmoulage, moussage ou moulage.

13. Système électrique haute tension pour véhicule selon l'une quelconque des revendications précédentes,
dans lequel le boîtier (48) comprend deux parties distinctes (48A, 48B) qui sont reliées l'une à l'autre au moyen d'un verrouillage par encliquetage ou d'une liaison à déclic.

14. Système électrique haute tension pour véhicule selon l'une quelconque des revendications précédentes,
dans lequel au moins l'une des lignes électriques principales et secondaires (20, 22, 24, 26, 74, 76) comprend un collecteur de connexion (60) comportant au moins une borne de connexion (62, 64), configuré pour établir une connexion enfichable.
